Europäisches Patentamt

European Patent Office

Office européen des brevets

(19)

(11) Veröffentlichungsnummer: **0 179 996**
**A1**

(12) **EUROPÄISCHE PATENTANMELDUNG**

(21) Anmeldenummer: **85110134.5**

(22) Anmeldetag: **13.08.85**

(51) Int. Cl.⁴: **F 23 C 11/02,** B 01 J 8/44

(30) Priorität: **12.10.84 DE 3437486**

(43) Veröffentlichungstag der Anmeldung: **07.05.86**
**Patentblatt 86/19**

(84) Benannte Vertragsstaaten: **AT CH DE FR IT LI NL**

(71) Anmelder: **Cornel. Schmidt GmbH & Co. KG,
von-Ketteler-Strasse 1, D-5090 Leverkusen 1 (DE)**

(72) Erfinder: **Kaden, Michael, Dipl.-Ing.,
Johannes-Strauss-Weg 8, D-4010 Hilden (DE)**

(74) Vertreter: **Happe, Otto, Dipl.-Ing., Isselburger Strasse 12,
D-5000 Köln 60 (DE)**

(54) **Wirbelschichtfeuerung.**

(57) Bei einer Wirbelschichtfeuerung mit Einrichtungen für die Zuführung von Verbrennungsluft in die Wirbelkammer (1) und mit in der Wirbelkammer (1) angeordneten Wärmeaustauschrohren (2) sind innerhalb der einen Wirbelschicht zwei Ebenen (3, 4) von Einrichtungen für die Zuführung von Verbrennungsluft in die Wirbelkammer (1) vorgesehen, von denen die eine (3) unterhalb und die andere (4) oberhalb der Wärmeaustauschrohre (2) angeordnet ist. Jede Ebene (3, 4) der Einrichtungen für die Zuführung von Verbrennungsluft ist unabhängig voneinander mit Verbrennungsluft beaufschlagbar.

Wirbelschichtfeuerung

Die Erfindung betrifft eine Wirbelschichtfeuerung mit Einrichtungen für die Zuführung von Verbrennungsluft in die Wirbelkammer und mit in der Wirbelkammer angeordneten Wärmeaustauschrohren.

Bei einer Wirbelschichtfeuerung wird gasförmiger, flüssiger oder fester Brennstoff verschiedener Körnung in dem aus inertem feinkörnigen Material bestehenden Wirbelbett verbrannt. Das Gemisch aus Brennstoff, Asche und Bettmaterial wird dabei so aufgewirbelt wird, daß es bei einer bestimmten Strömungsgeschwindigkeit in vielen Eigenschaften einer Flüssigkeit ähnelt. Der Wärmeaustausch innerhalb des Wirbelbettes und damit der Ausbrand auch von schlechten Brennstoffen ist besser als bei herkömmlichen Verfahren. Durch diese Eigenschaft kann der Verbrennungsvorgang bei relativ niedriger Temperatur ablaufen, wobei die Bildung von Stickoxyden weitgehend verhindert wird. Ebenso kann in der Wirbelschicht durch Zugabe von Absorbtionsmitteln, wie beispielsweise Kalkstein, die Einbindung des vom Brennstoff abgegebenen Schwefels erfolgen.

Die Optimierung des Brennstoffausbrandes und der Schwefeleinbindung, wie auch die Minimierung der Stickoxydemissionen ist von der Betriebstemperatur der Wirbelschicht abhängig. Für einen bestimmten Brennstoff sollte diese Temperatur soweit wie möglich, auch bei Teillastfahrweise, konstant gehalten werden. Da der Wärmeübergang an Heizflächen, die in die Wirbelschicht eingetaucht sind, konstant ist, ist ein Teillastbetrieb bei konstanter Wirbelbettemperatur nur möglich, wenn Teile der eingetauchten Heizfläche stillgelegt werden, d. h. die Verwirbelung des Bettmaterials wird an der Oberfläche der Tauchheizfläche verhindert. Da besonders bei Wirbelschichtfeuerungen kleiner Leistung auf eine Brennstoffaufbereitung verzichtet werden sollte, wird der Brennstoff hier von oben auf das Wirbelbett aufgegeben. Dabei ist es besonders wichtig, daß die gesamte Wirbelschichtoberfläche stets verwirbelt wird, da sonst Versinterungen und Verbackungen an der Oberfläche entstehen können.

Der Erfindung liegt die Aufgabe zugrunde, eine Wirbelschichtfeuerung so auszubilden, daß bei geringstmöglicher Umweltbelastung ein möglichst vollständiger Ausbrand der Brennstoffpartikel erzielt wird.

Die Lösung der gestellten Aufgabe besteht darin, bei einer Wirbelschichtfeuerung der eingangs genannten Art innerhalb der einen Wirbelschicht zwei Ebenen von Einrichtungen für die Zuführung von Verbrennungsluft in die Wirbelkammer vorgesehen sind, von denen die eine unterhalb und die andere oberhalb der Wärmeaustauschrohre angeordnet ist, und daß jede Ebene der Einrichtung für die Zuführung von Verbrennungsluft unabhängig voneinander mit Verbrennungsluft beaufschlagbar ist. Hierbei kann die Verbrennungsluft zwischen den beiden Ebenen von Einrichtungen für die Zuführung von Verbrennungsluft aufgeteilt oder auch nur entweder der oberen oder der unteren Einrichtung zugeteilt werden, so daß je nach Art des Brennstoffes und der geforderten Betriebsweise die Zuführung von Verbrennungsluft optimal geregelt werden kann.

Zweckmäßigerweise sind die Einrichtungen für die Zuführung von Verbrennungsluft durch nebeneinanderliegende Rohre gebildet, die an ihrer Oberfläche Düsenköpfe mit Öffnungen für den Luftaustritt aufweisen.

- 3 -

In Ausgestaltung der Erfindung sind die einzelnen Rohre für die Zuführung von Verbrennungsluft jeder Ebene unabhängig voneinander mit Verbrennungsluft beaufschlagbar. Dieses Merkmal der Erfindung ermöglicht es, die Wirbelschichtfeuerung mit beliebiger Teillast zu fahren; so kann eine gestufte Verbrennung herbeigeführt werden, wodurch sich besonders niedrige $NO_x$-Emissionswerte ergeben. Zum Erreichen von Teillasten bei konstanter Wirbelschicht-Betriebstemperatur werden entsprechend viele Luftzuführungsrohre von der unteren auf die obere Ebene umgeschaltet, wobei der entsprechende Teil der Tauchheizflächen nicht mehr mit dem aktiven Wirbelbett beaufschlagt wird.

Nach einem weiteren Merkmal der Erfindung sind die Rohre für die Zuführung der Verbrennungsluft mit Abstand voneinander angeordnet, so daß die Asche frei in den unter der Wirbelkammer vorgesehenen Trichter fließen kann. Dieser Trichter ist im Betrieb mit Asche gefüllt, die am unteren Ende des Trichters geregelt entnommen werden kann.

Bei einer besonders vorteilhaften Ausführungsform der Erfindung sind die Wärmeaustauschrohre jeweils in Gruppen fluchtend übereinander angeordnet. Hierdurch sind die Wärmeaustauschrohre nur einer verhältnismäßig geringen Korrosions- und Erosionsbelastung ausgesetzt. Eine weitere Verminderung der Korrosionsbelastung kann dadurch erreicht werden, daß die fluchtend übereinander angeordneten Wärmeaustauschrohre mit einer Stampfmasse aus keramischem Material abgekleidet sind.

Um auch die Korrosions- und Erosionsbelastung der in der oberen Ebene angeordneten Rohre für die Zuführung von Verbrennungsluft gering zu halten, weisen nach einem anderen Merkmal der Erfindung die Rohre der oberen Ebene einen

- 4 -

aufrechtstehenden rechteckigen Querschnitt auf und sind derart bemessen, daß die Breite der schmalen Rechteckseite nicht wesentlich größer ist als der Durchmesser der Wärmeaustauschrohre und daß jeweils ein Rohr fluchtend über einer Gruppe von Wärmeaustauschrohren angeordnet ist.

Die erfindungsgemäße Einrichtung kann noch dadurch verbessert werden, daß die Öffnungen in den Rohren für die Zuführung von Verbrennungsluft der oberen Ebene als nach unten gerichtete Düsen ausgebildet sind.

Die Erfindung ist anhand der Zeichnung näher erläutert. Es zeigen:

Fig. 1   eine Wirbelschichtfeuerung im Längsschnitt;

Fig. 2   eine Gruppe von Wärmeaustauschrohren mit darüber angeordnetem Rohr für die Zuführung von Verbrennungsluft, im Querschnitt.

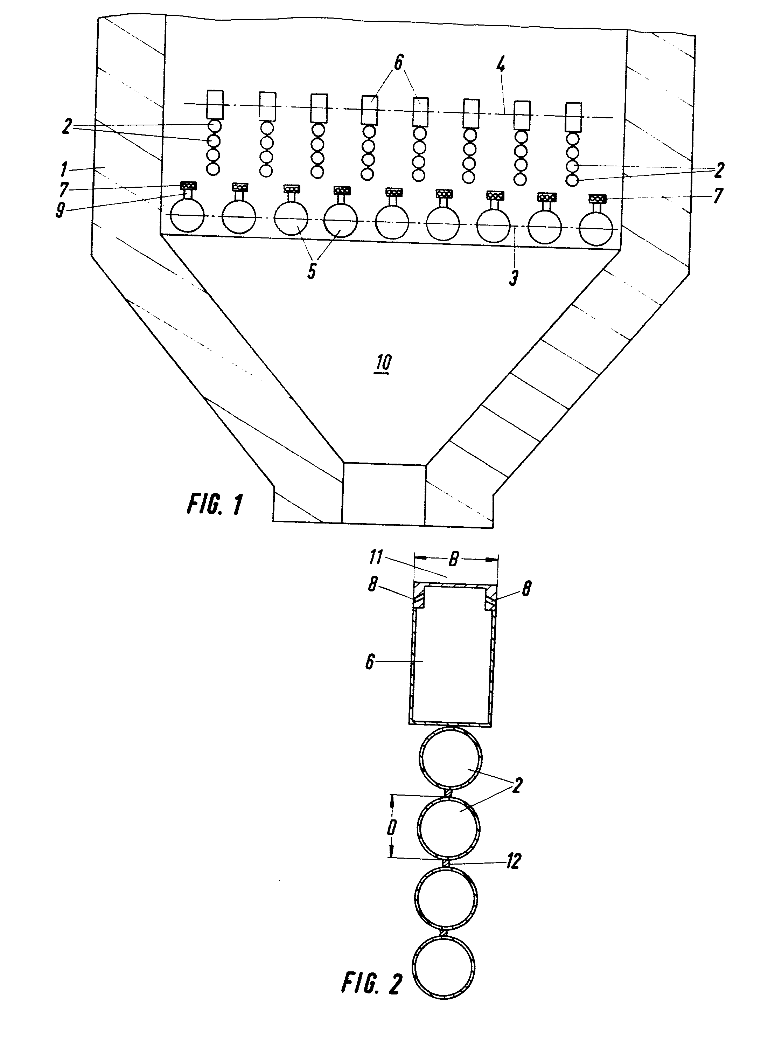

Die in Fig. 1 dargestellte Wirbelschichtfeuerung besteht aus einer quadratischen oder rechteckigen Wirbelkammer 1, in der Wärmeaustauschrohre 2 in Gruppen fluchtend übereinander angeordnet sind. Die Einrichtungen für die Zuführung von Verbrennungsluft sind in zwei durch strichpunktierte Linien angedeutete Ebenen 3 und 4 angeordnet, wobei sich die Ebene 3 unterhalb und die Ebene 4 oberhalb der Wärmeaustauschrohre 2 befindet. Die Einrichtungen für die Zuführung von Verbrennungsluft der Ebenen 3 und 4 sind mit - nicht dargestellten - gesonderten Luftleitungen verbunden, so daß die beiden Ebenen 3 und 4 unabhängig voneinander mit Verbrennungsluft beaufschlagt werden können. Die Einrichtungen für die Zuführung der Verbrennungsluft sind durch nebeneinanderliegende Rohre 5 bzw. 6 gebildet,

- 5 -

die an ihrer Oberseite mit Öffnungen 7 bzw. 8 (vgl. Fig. 2) für den Luftaustritt versehen sind. Dabei befinden sich die Öffnungen 7 in auf die Rohre 5 aufgesetzte Stutzen 9. Die Rohre 5 und 6 sind jeweils mit - ebenfalls nicht dargestellten - gesonderten Luftleitungen verbunden, so daß sie unabhängig voneinander mit Verbrennungsluft beaufschlagt werden können. Die Zuführung der Verbrennungsluft zu den Rohren 5 und 6 ist derart gestaltet, daß jeweils auch nur einige der Rohre 5 und 6 mit Verbrennungsluft beaufschlagt werden können. Somit ist zu erreichen, daß einem Teil der Wirbelschicht unterhalb der Luftzuführungsrohre keine Verbrennungsluft zugeführt wird und damit die Wirbelschicht in diesem Bereich die Wärme nur in stark vermindertem Maße an die Wärmeaustauschrohre 2 abgeben kann. Die Rohre 5 und 6 sind jeweils mit Abstand voneinander angeordnet; durch die dadurch gebildeten Zwischenräume kann die Asche frei in den unter der Wirbelkammer 1 angeordneten Trichter 10 fließen. Jedes Rohr 6 ist fluchtend über einer Gruppe von Wärmeaustauschrohren 2 angeordnet, wobei die Gruppen von Wärmeaustauschrohren 2 derart versetzt zu den Rohren 5 der unteren Ebene 3 angeordnet sind, daß die Wärmeaustauschrohre 2 sich jeweils über einem Zwischenraum zwischen zwei Rohren 5 der unteren Ebene 3 befinden.

Wie aus Fig. 2 zu ersehen ist, sind die Öffnungen 8 der Rohre 6 als nach unten gerichtete Düsen ausgebildet. Die Rohre 6 weisen einen aufrechtstehenden rechteckigen Querschnitt auf; sie sind derart bemessen, daß die Breite B der schmalen Rechteckseite 11 kleiner oder zumindest nicht wesentlich größer ist als der Durchmesser D der Wärmeaustauschrohre 2. Die Wärmeaustauschrohre 2 einer Gruppe sind durch Stege 12 miteinander verbunden.

Ansprüche:

1. Wirbelschichtfeuerung mit Einrichtungen für die Zuführung von Verbrennungsluft in die Wirbelkammer und mit in der Wirbelkammer angeordneten Wärmeaustauschrohren, dadurch gekennzeichnet, daß innerhalb der einen Wirbelschicht zwei Ebenen (3, 4) von Einrichtungen für die Zuführung von Verbrennungsluft in die Wirbelkammer (1) vorgesehen sind, von denen die eine (3) unterhalb und die andere (4) oberhalb der Wärmeaustauschrohre (2) angeordnet ist, und daß jede Ebene (3, 4) der Einrichtungen für die Zuführung von Verbrennungsluft unabhängig voneinander mit Verbrennungsluft beaufschlagbar ist.

2. Wirbelschichtfeuerung nach Anspruch 1, dadurch gekennzeichnet, daß die Einrichtungen für die Zuführung von Verbrennungsluft durch nebeneinanderliegende Rohre (5, 6) gebildet sind, die an ihrer Oberseite Düsenköpfe mit Öffnungen (7, 8) für den Luftaustritt aufweisen.

3. Wirbelschichtfeuerung nach Anspruch 2, dadurch gekennzeichnet, daß die einzelnen Rohre (5, 6) jeder Ebene (3, 4) unabhängig voneinander mit Verbrennungsluft beaufschlagbar sind.

4. Wirbelschichtfeuerung nach Anspruch 2 oder 3, dadurch gekennzeichnet, daß die Rohre (5, 6) mit Abstand voneinander angeordnet sind.

5. Wirbelschichtfeuerung nach einem der Ansprüche 1 bis 4, dadurch gekennzeichnet, daß die Wärmeaustauschrohre (2) jeweils in Gruppen fluchtend übereinander angeordnet sind.

6. Wirbelschichtfeuerung nach Anspruch 5, dadurch gekennzeichnet, daß die Wärmeaustauschrohre (2) mit einer Stampfmasse aus keramischem Material abgekleidet sind.

7. Wirbelschichtfeuerung nach Anspruch 5 oder 6, dadurch gekennzeichnet, daß die Rohre (6) der oberen Ebene (4) einen aufrechtstehenden rechteckigen Querschnitt aufweisen und derart bemessen sind, daß die Breite (B) der schmalen Rechteckseite (11) nicht wesentlich größer ist als der Durchmesser (D) der Wärmeaustauschrohre (2) und daß jeweils ein Rohr (6) fluchtend über einer Gruppe von Wärmeaustauschrohren (2) angeordnet ist.

8. Wirbelschichtfeuerung nach einem der Ansprüche 3 bis 7, dadurch gekennzeichnet, daß die Öffnungen (8) in den Rohren (6) der oberen Ebene (4) als nach unten gerichtete Düsen ausgebildet sind.

0179996

1/1

FIG. 1

FIG. 2

Europäisches
Patentamt

**EUROPÄISCHER RECHERCHENBERICHT**

0179996
Nummer der Anmeldung

EP 85 11 0134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 597 945 (WORSLEY) * Seite 1, Zeile 97 - Seite 2, Zeile 43; Seite 2, Zeilen 55-82; Seite 3, Zeilen 35-42; Figuren 1,2 * | 1,3-5 | F 23 C 11/02 B 01 J 8/44 |
| Y | | 2,8 | |
| | --- | | |
| Y | US-A-4 402 665 (KORENBERG) * Spalte 2, Zeile 64 - Spalte 3, Zeile 47; Figuren 1-5 * | 2,8 | |
| | --- | | |
| X | PATENTS ABSTRACTS OF JAPAN, Band 7, Nr. 95 (M-209)[1240], 21. April 1983; & JP - A - 58 19 611 (BABCOCK HITACHI K.K.) 04-02-1983 | 1,3 | |
| | | | RECHERCHIERTE SACHGEBIETE (Int. Cl.4) |
| Y | IDEM | 2,8 | F 23 C F 22 B B 01 J |
| | --- | | |
| Y | AU-B- 517 419 (ENERGY PRODUCTS OF IDAHO) * Seite 16, Zeilen 9-26; Figuren 7-12 * | 2,8 | |
| | --- | | |
| A | FR-A-2 526 129 (DORR-OLIVER) * Seite 8, Zeilen 24-26; Figur 3 * | 7,8 | |
| | ----- | | |

Der vorliegende Recherchenbericht wurde für alle Patentansprüche erstellt.

| Recherchenort DEN HAAG | Abschlußdatum der Recherche 21-02-1986 | Prüfer PHOA Y.E. |
|---|---|---|